# EUROPÄISCHE PATENTSCHRIFT

(11) **EP 3 250 402 B1**
(45) Veröffentlichungstag und Bekanntmachung des Hinweises auf die Patenterteilung: **14.08.2019**
(21) Anmeldenummer: 15790546.4
(22) Anmeldetag: 04.11.2015
(51) Int. Cl.: B60G 11/08, B60G 11/10, B60G 7/00, F16F 1/22

(54) **BLATTFEDER-ANORDNUNG IM FAHRWERK EINES FAHRZEUGS**
LEAF SPRING ARRANGEMENT IN THE CHASSIS OF A VEHICLE
DISPOSITION DE RESSORT À LAMES DANS LE CHÂSSIS D'UN VÉHICULE

(30) Priorität: 26.01.2015 DE 102015201299
(43) Veröffentlichungstag der Anmeldung: 06.12.2017
(73) Patentinhaber: Bayerische Motoren Werke Aktiengesellschaft, 80809 München (DE)
(72) Erfinder: EIFFLÄNDER, Thomas, 81825 München (DE)
(86) Internationale Anmeldenummer: PCT/EP2015/075723
(87) Internationale Veröffentlichungsnummer: WO 2016/119930

(56) Entgegenhaltungen:
- EP-A1- 2 070 743
- EP-B1- 2 639 087
- FR-A- 1 357 979
- JP-A- H04 113 910
- US-A- 2 122 961
- US-A1- 2001 040 359
- US-A1- 2007 040 312

## Beschreibung

Die Erfindung betrifft ein Fahrwerk eines Fahrzeugs nach dem Oberbegriff des Anspruchs 1. Zum Stand der Technik wird neben der EP 2 639 087 B1 und der DE 10 2012 107 205 A1 oder der DE 10 2011 085 145 B4 insbesondere auf JP H04 113910 A verwiesen.

Zwischen dem Aufbau (= Karosserie) eines Kraftfahrzeugs und dessen Rad oder Rädern (einer Achse) als Tragfedern wirkende Blattfedern sind in den unterschiedlichsten Ausgestaltungen und Anordnungen bekannt. Die einfachste Bauform einer Blattfeder ist durch ein flach-rechteckiges Profil vorzugsweise aus Federstahl gebildet, welches bogenförmig vorgespannt ist und auf Biegung beansprucht wird, weshalb eine Blattfeder eine Biegefeder darstellt. Bekannt ist eine Bauform mit mehreren gleich breiten Federlagen, die mit verschiedenen Längen und Vorspannungen übereinander zu einem Federpaket geschichtet und bspw. durch Federklemmen zusammengehalten sind. Weiterhin bekannt sind Parabelfedern mit nur einer Federlage, deren Stärke zu den Enden hin abnehmen kann, wobei hier oftmals faserverstärkter Kunststoff als Werkstoff zum Einsatz kommt. Gleiches gilt für Hyperbelfedern, deren Querschnittsprofil üblicherweise in der Breite zu den Enden hin zunimmt, während dessen Höhe abnehmen kann, um eine möglichst gleichmäßige Materialbeanspruchung über der Länge der Blattfeder zu erreichen.

In der zur Bildung des Oberbegriffs des Anspruchs 1 herangezogenen JP H04 113910 A ist ein Amphibien-Fahrzeug gezeigt, dessen Räder für einen Einsatz im Wasser zum Fahrzeug-Aufbau hin eingefahren werden können, wofür ein als Tragfeder fungierendes und sich in Fzg.-Querrichtung erstreckendes Blattfederelement in Fzg.-Längsrichtung betrachtet geringfügig S-förmig gestaltet und im Zuge des Ein- und Ausfahrens der Räder um eine sich in Längserstreckungsrichtung der Blattfeder erstreckende Achse um 180° verdrehbar ist.

Es kann erwünscht sein, die Federkraftcharakteristik einer im Fahrwerk eines Fahrzeugs vorgesehenen Tragfeder verändern zu können, was praktisch heißt, dass die Federrate bzw. Federsteifigkeit (oder im Falle eines linearen Zusammenhangs zwischen Federkraft und Federweg die Federkonstante) der Tragfeder durch irgendwelche Maßnahmen veränderbar ist. Beispiele für den Einsatz einer Blattfeder mit veränderbarer Federkraftcharakteristik, die auch oder insbesondere für die Verwendung als Wankstabilisierung zur Niveauverstellung des Aufbaus bei einem zweispurigen Fahrzeug geeignet sind, zeigen die eingangs an zweiter und dritter Stelle genannten Schriften.

Hiermit soll nun eine weitere Möglichkeit für eine Veränderung der Federkraftcharakteristik einer Blattfeder in einem Fahrzeug-Fahrwerk aufgezeigt werden (= Aufgabe der vorliegenden Erfindung), wobei der Begriff "Veränderung" bzw. "veränderbar" keineswegs beinhalten muss, dass eine Veränderung aktiv im Betrieb des Fahrzeugs möglich ist. Vielmehr soll hiervon auch eine praktisch nur einmalige Möglichkeit erfasst sein, die Blattfeder-Anordnung auf unterschiedlichen Federcharakteristiken einstellen zu können, bspw. eine von zwei möglichen Charakteristiken auswählen zu können.

Die Lösung dieser Aufgabe ergibt sich mit den Merkmalen des Anspruchs 1; vorteilhafte Aus- und Weiterbildungen sind Inhalt der Unteransprüche.

Wie vorstehend ausgeführt wurde, handelt es sich bei einer Blattfeder um eine Biegefeder mit zumindest annähernd rechteckiger Fläche und einem bspw. zumindest annähernd rechteckigen Querschnitt bzw. Querschnittsprofil. Die Längserstreckung der Blattfeder ist durch die längere Kante oder Erstreckung bzw. Abmessung der rechteckigen Fläche definiert und verläuft senkrecht zum Querschnittsprofil. Die Haupt-Belastungsrichtung der Blattfeder, in welcher deren Federkraft wirken soll, verläuft üblicherweise im wesentlichen senkrecht zur besagten rechteckigen Fläche der Blattfeder. Üblicherweise stellt die längere Kante des bspw. rechteckigen Querschnittsprofils gleichzeitig die kürzere Erstreckung oder Abmessung der besagten rechteckigen Fläche dar, während die kürzere Kante des Querschnittsprofils in Hauptbelastungsrichtung der Blattfeder verläuft. Wird nun eine solchermaßen eingespannte Blattfeder um eine durch ihre Längserstreckung definierte und jedenfalls in den Enden der Blattfeder vorzugsweise mittig durch deren Querschnittsprofil verlaufende Drehachse um 90° gedreht, so besitzt die Blattfeder in der dann gedrehten Position (bzw. Drehposition) bei ansonsten unveränderten Randbedingungen, insbesondere bei gleicher Belastungsrichtung, selbstverständlich eine andere Federrate bzw. Federcharakteristik, da dann die Hauptbelastungsrichtung der Blattfeder in Richtung der längeren Kante von deren Querschnittsprofil verläuft. Dies lässt sich im Übrigen auch mit einer Änderung des Flächenträgheitsmoments einhergehend mit der beschrieben Änderung der Drehposition einer Blattfeder beschreiben.

Ein Vorteil der vorliegenden Erfindung gegenüber bekanntem Stand der Technik liegt darin, dass die für eine Veränderung der Federkraftcharakteristik aufzubringende Kraft (bzw. ein entsprechendes Moment) nicht in Richtung der zwischen dem Fahrzeug-Aufbau und dem jeweiligen Rad übertragenen Kraft, d.h. der Abstützt-Kraft des Aufbaus auf dem Rad, liegt, sondern senkrecht dazu einzubringen ist und damit der anteiligen Abstützkraft nicht direkt entgegenwirken muss. Dies ermöglicht eine besonders effektive weil mit geringem Aufwand darstellbare motorische Veränderbarkeit der Federcharakteristik.

In vorstehend beschriebener allgemeiner Form kann eine Blattfeder zur anteiligen Abstützung des Fahrzeug-Aufbaus auf einem Rad bspw. radindividuell angeordnet sein, wenn denn die endseitige Abstützung bzw. Einspannung der Blattfeder am Rad bzw. Radträger einerseits und am Fzg.-Aufbau andererseits geeignet ausgebildet ist, d.h. wenn die Blattfeder in den verschiedenen Drehpositionen einerseits am Rad bzw. Radträger und andererseits am Fzg.-Aufbau (oder einem Achsträger) geeignet fixiert werden kann. Dabei kann vorgesehen sein, dass die unterschiedlichen Drehpositionen nur einmalig, nämlich bei der Montage der Blattfeder in der Radaufhängung, eingestellt werden können und somit die Blattfeder einmalig in einer bestimmten Drehposition fixiert wird, wobei dies vorteilhaft sein kann, wenn mit praktisch gleichen Bauelementen für verschiedene Fahrzeug-Varianten unterschiedliche Federcharakteristika darstellbar sein sollen. Alternativ kann jedoch auch vorgesehen sein, eine erfindungsgemäß angeordnete Blattfeder im eingebauten Zustand vorzugsweise mit Hilfe eines geeigneten Aktuators in erfindungsgemäßer Weise zu verdrehen, um bedarfsabhängig bzw. in Abhängigkeit von irgendwelchen Randbedingungen unterschiedliche Federraten bzw. Federcharakteristika darstellen zu können.

Vorstehend wurde ein möglicher Anwendungsfall erläutert, nämlich dass eine Blattfeder mit erfindungsgemäß veränderbarer Federcharakteristik zur anteiligen Abstützung des Fahrzeug-Aufbaus auf einem Rad bspw. radindividuell angeordnet sein kann. Alternativ kann eine Blattfeder mit erfindungsgemäß veränderbarer Federcharakteristik aber auch an einem zweispurigen Fahrzeug als grundsätzlich bekannte Querblattfeder zwischen den beiden Rädern einer Achse des Fahrzeugs mit anteiliger Abstützung des Fahrzeug-Aufbaus vorgesehen sein. Eine Veränderung der Federkraftcharakteristik hat dann auch eine Veränderung des Wankverhaltens des Fahrzeug-Aufbaus bei Kurvenfahrt des Fahrzeugs zur Folge; selbstverständlich kann auch damit auf den Höhenstand (das Niveau) des Aufbaus eingewirkt werden.

Wie eine geeignete Fixierung einer Blattfeder in unterschiedlichen Drehpositionen (bezüglich einer Verdrehung um deren Längserstreckung) einfach dargestellt werden kann, ist im Patentanspruch 2 für eine Querblattfeder, d.h. eine sich in Fzg.-Querrichtung und somit innerhalb einer Fahrzeugachse zwischen deren beiden Rädern erstreckende Blattfeder angegeben, wenngleich das gleiche Befestigungsprinzip auch bei einer nur für ein Rad vorgesehenen Blattfeder, die sich dann bspw. in Fzg.-Längsrichtung erstrecken kann, angewandt werden kann. Eine Befestigungsanordnung einer Blattfeder über an deren beiden Enden befestigte Verlängerungsschenkel ist bspw. in der eingangs erstgenannten Schrift gezeigt - hiervon unterscheidet sich die vorliegende Erfindung jedoch dadurch, dass vorliegend die Blattfeder in unterschiedlichen Drehpositionen bezüglich einer Verdrehung um eine sich in Richtung ihrer Längserstreckung bzw. zwischen den Befestigungspunkten der Blattfeder an den Kuppelelementen erstreckenden Achse fixierbar ist. Vorzugsweise ist dabei eine Fixierung in mehreren definierten Blattfeder-Drehpositionen möglich, welche bevorzugte unter gewissen Randbedingungen darzustellende Positionen sind, die sich um gewisse Verdrehwinkel um eine sich in Richtung der Längserstreckung der Blattfeder verlaufenden Achse voneinander unterscheiden. Beispielsweise können in diesem Sinne zwei verschiedene Blattfeder-Drehpositionen vorgesehen sein, die sich um einen Drehwinkel von 90° unterscheidenden. Grundsätzlich kann hierfür bspw. ein das Ende der Blattfeder formschlüssig aufnehmendes Kuppelelement als ein formschlüssiges Verbindungselement fungierend in verschiedenen um die gewünschte Drehachse der Blattfeder verdrehten Positionen am Verlängerungsschenkel fixierbar sein. Hierfür kann der Verbindungsbereich zwischen dem Kuppelelement und dem zugehörigen Endabschnitt des Verlängerungsschenkels auch hinsichtlich verschiedener Drehpositionen formschlüssig bspw. nach Art einer Stirnverzahnung ausgebildet sein.

Für eine o.g. "aktive" Veränderung der Federcharakteristik einer erfindungsgemäßen Blattfederanordnung im Betrieb des Fahrzeugs wird gemäß Anspruch 3 zumindest ein Aktuator vorgeschlagen, mit Hilfe dessen die Blattfeder insbesondere gegenüber den Verlängerungsschenkeln in besagter Weise verdrehbar und an diesen in zumindest zwei verschiedenen Drehwinkeln fixierbar ist. Auch hierfür können die Enden der sich in Fahrzeug-Querrichtung erstreckenden und bezüglich der jeweiligen Fahrzeug-Achse zentral angeordneten Blattfeder jeweils über ein Kuppelelement analog vorstehendem Absatz mit einem Verlängerungsschenkel verbunden sein, an dessen anderem Ende ein Rad der Achse abgestützt ist, während der Fahrzeug-Aufbau nahe der Kuppelelemente auf der durch die Blattfeder mit den beiden Verlängerungsschenkeln gebildeten Blattfeder-Anordnung abgestützt ist. Die gewünschte Fixierung kann dabei bspw. dadurch erfolgen, dass der Aktuator als Stellmotor mit selbsthemmendem Schneckengetriebe ausgebildet ist; andere Gestaltungen zur Fixierung der Blattfeder in einer gewünschten (erfindungsgemäßen) Drehposition sind durchaus möglich.

Je nach Ausführung des genannten Aktuators bzw. der entsprechenden Aktuatorik ist damit ein aktives Fahrwerk eine Fahrzeugs darstellbar, welches sich an ändernde Randbedingungen im Sinne einer Niveauregelung anpasst wie auch aktiv die Fahrzeug-Vertikaldynamik geeignet einstellen kann. Die Ansteuerung der Aktuatorik erfolgt dabei durch eine geeignete elektronischen Steuereinheit, welche Regelprozesse beinhalten kann. Durch eine veränderbare Wanksteifigkeit bzw. ein veränderbares Wankverhalten des Fahrzeugs (durch Vorsehen einer erfindungsgemäßen Querblattfeder) ist (wie grundsätzlich bekannt) damit auch eine Einflussnahme auf das Eigenlenkverhalten und damit auf die Querdynamik des Fahrzeugs möglich. Um gezielt bestimmte unterschiedliche Federraten oder Federcharakteristiken darstellen zu können, kann der Querschnitt oder das Querschnittsprofil einer erfindungsgemäß angeordneten Blattfeder ein von einer Rechteck-Form abweichendes Profil aufweisen. Beispielsweise mit einem U-Profil oder einem C-Profil, aber auch mit einem sternförmigen Profil lassen sich auch mit nur geringfügigem Verdrehen um eine senkrecht zum Profilquerschnitt vorzugsweise durch dessen Flächenschwerpunkt verlaufende Drehachse unterschiedliche Federraten bezüglich unveränderter, nämlich im im Fahrzeug verbauten Zustand im wesentlichen in Vertikalrichtung verlaufender Belastungsrichtung darstellen. Gleiches gilt für eine Blattfeder-Gestaltung, die sich durch verschiedene (übereinander gestapelte) Lagen, die unterschiedliche Steifigkeit oder Festigkeit besitzen, auszeichnet, bspw. indem eine dreischichtige Blattfeder aus faserverstärktem Kunststoff zum Einsatz kommt, deren (in einer der möglichen Drehwinkelpositionen) obere und untere Deckschicht aus glasfaserverstärktem Kunststoff besteht und deren dazwischen liegende Zwischenschicht in kohlefaserverstärktem Kunststoff ausgeführt ist. Bei diesem Beispiel handelt es sich bei den verschiedenen Lagen somit um Lagen aus verschiedenen Materialien.

Im folgenden wird die Erfindung anhand auf das wesentliche abstrahiert dargestellter Ausführungsbeispiele weiter beschrieben, wobei
**Figur 1** eine Ansicht von hinten auf die linke Hälfte einer Hinterachs-Radaufhängung bzw. eines Fahrwerks eines Personenkraftwagens mit einer erfindungsgemäßen Quer-Blattfeder in einer ersten Drehposition zeigt, und
**Figur 2** die Darstellung von Fig.1 in einer zweiten um 90° verdrehten Drehposition der sich in Fzg.-Querrichtung erstreckenden Blattfeder zeigt.
**Figur 3a** zeigt perspektivisch eine mögliche Verbindung zwischen der hier nicht dargestellten Blattfeder, die in ein Kuppelelement einführbar ist, an das sich ein Verlängerungsschenkel anschließt, wobei in **Figur 3b** die Aufsicht auf die dem Kuppelelement zugewandte Stirnwand des Verlängerungsschenkels dargestellt ist.

In den **Figuren 4a** - **4c** ist nur der Querschnitt (d.h. das Querschnittsprofil) einer möglichen Blattfeder in verschiedenen erfindungsgemäßen Drehwinkelpositionen dargestellt.

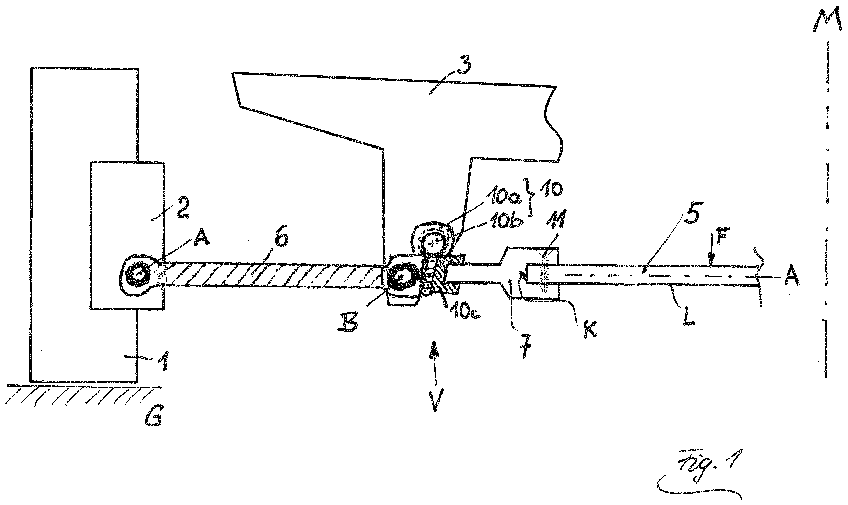

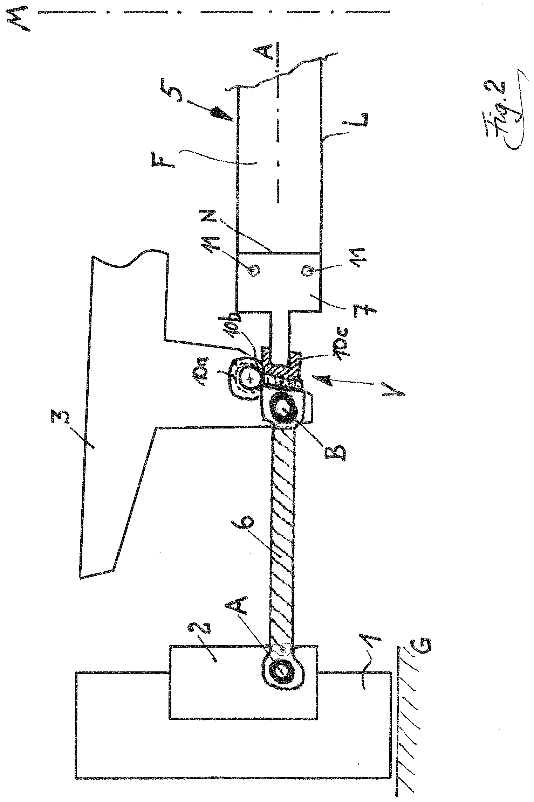

Zunächst auf **Fig.1** Bezug nehmend ist mit der Bezugsziffer 1 das linke (auf dem Boden G stehende) Hinterrad eines zweispurigen Fahrzeugs gekennzeichnet, welches wie üblich an einem Radträger 2 drehbar befestigt ist, welcher in üblicher Weise über mehrere hier nicht gezeigte radführende Lenker am Fahrzeug-Aufbau bzw. an einem Achsträger 3, auf welchem der Fzg.-Aufbau abgestützt ist, angelenkt ist. Ebenso wie die radführenden Lenker nicht figürlich dargestellt - jedoch vorhanden - ist ein Dämpfer zur Bedämpfung der (üblichen und auch in der Figurendarstellung in Vertikalrichtung ausgerichteten) Vertikalbewegung des Fahrzeug-Aufbaus bzw. des Achsträgers 3 gegenüber dem Rad 1, welcher einerseits bspw. am Radträger 2 und andererseits bspw. am Fzg.-Aufbau abgestützt ist. Eine in Fahrzeug-Querrichtung ausgerichtete Blattfeder 5 fungiert als Tragfeder für den Fahrzeug-Aufbau gegenüber dem Rad 1 und verläuft von einem dem linken Rad 1 zugeordneten bzw. am linken Radträger 2 in einer Anlenkstelle A abgestützten linken Verlängerungsschenkel 6 bis zu einem bezüglich der Fzg.-Mitte (Mittenebene M) spiegelbildlich angeordneten nicht gezeigten rechten Verlängerungsschenkel, dessen außenseitiges (rechtes) Ende am hier nicht gezeigten rechten Rad angelenkt ist. Damit stellen die beiden genannten Verlängerungsschenkel 6 praktisch eine Verlängerung der Blattfeder 5 dar, indem jeder Verlängerungsschenkel 6 mit einem Ende in der Anlenkstelle A zumindest geringfügig gelenkig am Radträger 2 befestigt ist und in seinem gegenüberliegenden, der eigentlichen Blattfeder 5 zugewandten Endbereich zumindest geringfügig gelenkig in einer Anlenkstelle B am Achsträger 3 befestigt ist. Die genannte Gelenkigkeit in den Anlenkstelllen A, B soll dabei eine gewisse Vertikalbewegung des Achsträgers 3 gegenüber dem Rad 1 ermöglichen, so dass der (bzw. die) Verlängerungsschenkel 6 in den gelenkigen Anlenkstellen A, B am Radträger 2 und am Achsträger 3 zumindest geringfügig um eine in Fzg.-Längsrichtung bzw. senkrecht zur Zeichenebene von Fig.1, 2 verlaufende Achse verdrehbar ist (bzw. sind).

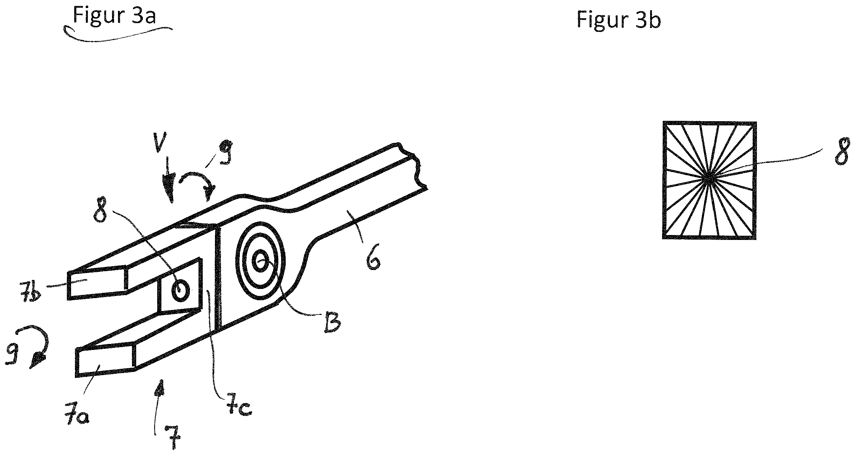

Vorzugsweise ist jeder Verlängerungsschenkel 6 im wesentlichen biegesteif ausgebildet, d.h. er soll sich insbesondere aufgrund von auf seine Enden bzw. in den besagten Anlenkstellen A, B in Vertikalrichtung gerichteten Kräften praktisch nicht oder zumindest möglichst wenig verbiegen. Zur Verbindung der Verlängerungsschenkel 6 mit der eigentlichen Blattfeder 5, welche sich durch eine ausgeprägte Biegefeder-Eigenschaft auszeichnet, ist (je Verlängerungsschenkel 6) ein im folgenden anhand der Figuren 3a, 3b beispielhaft beschriebenes Kuppelelement 7 vorgesehen, welches eine fixierbare Verbindung V zwischen dem Verlängerungsschenkel 6 und der Blattfeder 5 herstellt. Diese Verbindung V ist ausgelegt, insbesondere die auf den Verlängerungsschenkel 6 bzw. auf jeden der Verlängerungsschenkel in Vertikalrichtung einwirkende Kräfte im wesentlichen unverfälscht auf die Blattfeder 5 zu übertragen bzw. in diese einzuleiten.

**Fig.3a** zeigt in einer möglichen, sich von der Ausführungsform der Figuren 1, 2 unterscheidenden Ausführungsform prinzipiell, wie eine vorstehend beschriebene kraftübertragende Verbindung V zwischen einer in Fig.3a nicht gezeigten Blattfeder (5) und einem Verlängerungsschenkel 6 an dessen nahe der Abstützstelle B liegendem Endabschnitt gestaltet sein kann. Hierfür ist ein U-förmiges Kuppelelement 7 vorgesehen, zwischen dessen beiden Schenkeln 7a, 7b ein Ende der Blattfeder (5) eingefügt und fest mit diesem Kuppelelement 7 verbunden ist, bspw. indem ein Befestigungsbolzen (in Fig.3a nicht gezeigt) senkrecht durch die beiden Schenkel 7a, 7b des Kuppelelements 7 und den dazwischen liegenden Blattfeder-Abschnitt hindurch geführt ist. Über seine die beiden Schenkel 7a, 7b verbindende Basis 7c ist das Kuppelelement 7 bspw. über einen senkrecht zur Basis 7c ausgerichteten Bolzen 8 um die Achse dieses Bolzens 8 gemäß Pfeilrichtung 9 verdrehbar mit dem Endabschnitt des Verlängerungsschenkels 6 verbunden und an diesem ausreichend flächig abgestützt, womit das Kuppelelement 7 nahe der in diesem Verlängerungsschenkel 6 vorgesehenen Abstützstelle B (des Verlängerungsschenkel 6 am Achsträger 3) liegt. Über die dem Verlängerungsschenkel 6 zugewandte Stirnfläche der Basis 7c ist das Kuppelelement 7 und damit auch die starr zwischen dessen Schenkeln 7a, 7b eingespannte und somit starr mit dem Kuppelelement 7 verbundene Blattfeder (5) in der gewünschten kraftübertragenden Weise am Verlängerungsschenkel 6, genauer an dessen dem Kuppelelement 7 zugewandter Stirnseite abgestützt. Indem wie genannt das Kuppelelement 7 gemäß Pfeil 9 um den Bolzen 8 gegenüber dem Verlängerungsschenkel 6 verdrehbar ist, ist somit auch die im Kuppelelement 7 befestigte Blattfeder (5) in dieser Weise verdrehbar. Jedoch ist es erforderlich, zumindest eine bestimmte Drehposition (gemäß Pfeil 9) der Blattfeder (5) zu sichern und damit ein ungewünschtes Verdrehen der Blattfeder (5) bzw. des Kuppelelements 7 zu verhindern. Für eine solche Sicherung bzw. Fixierung der Blattfeder in einer bestimmten Drehposition (bezüglich der möglichen Verdrehung der Blattfeder um eine sich in Richtung von deren Längserstreckung bzw. in Richtung des Bolzens 8 erstreckenden Achse) bestehen verschiedene Möglichkeiten, von denen im weiteren zwei näher erläutert werden.

Auf die **Figuren 1****,** **2** zurückkommend erkennt man darin das Kuppelelement 7 sowie bruchstückhaft die in diesem endseitig fest installierte Blattfeder 5 in zwei verschiedenen Drehpositionen, d.h. in Fig.2 ist die Blattfeder 5 um 90° gegenüber der in Fig.1 gezeigten Position um eine Achse A verdreht. Dabei sind in diesen beiden Figuren 1, 2 auch zuvor in der Erläuterung von Fig.3a abstrakt genannte und hier schraubenartig gestaltete Befestigungsbolzen 11 gezeigt, mittels derer die Blattfeder 5 starr mit dem Kuppelelement 7 verbunden ist.

Bei der vorliegend gezeigten Blattfeder 5 handelt es um eine Biegefeder mit zumindest annähernd rechteckiger Fläche F (vgl. Fig.2) und einem bspw. zumindest annähernd rechteckigen Querschnitt bzw. Querschnittsprofil, welches die Kanten K (vgl. Fig.1) und N (vgl. Fig.2) aufweist. Die Längserstreckung L der Blattfeder 5 ist durch die längere Kante L oder Erstreckung bzw. Abmessung der rechteckigen Fläche F definiert und verläuft senkrecht zum bspw. ebenfalls rechteckigen Querschnittsprofil. Die Haupt-Belastungsrichtung der Blattfeder 5, in welcher deren Federkraft wirken soll, verläuft üblicherweise im wesentlichen senkrecht zur besagten rechteckigen Fläche F der Blattfeder 5 (bzw. parallel zu deren Kante K), weshalb üblicherweise Blattfedern in Fahrzeug-Fahrwerken solchermaßen verbaut sind, wie vorliegend die in Fig.1 dargestellte Drehposition der Blattfeder 5 ist. Üblicherweise stellt die längere Kante N des bspw. rechteckigen Querschnittsprofils gleichzeitig die kürzere Erstreckung oder Abmessung der besagten rechteckigen Fläche F dar, während die kürzere Kante K des Querschnittsprofils in Richtung der üblichen Lasteinleitung der Blattfeder 5 verläuft (wie bei der Blattfeder-Drehposition von Fig.1).

Wird nun eine bzw. die solchermaßen gemäß Fig.1 eingespannte bzw. positionierte Blattfeder 5 um eine bzw. die durch ihre Längserstreckung L definierte und jedenfalls in den Enden der Blattfeder 5 vorzugsweise mittig durch deren Querschnittsprofil verlaufende Drehachse A um 90° gedreht, so besitzt die Blattfeder 5 in der dann gedrehten und in Fig.2 gezeigten Position (bzw. Drehposition) bei ansonsten unveränderten Randbedingungen, insbesondere bei gleicher Belastungsrichtung und gleicher Belastungskraft (durch den Fzg.-Aufbau), selbstverständlich eine andere Federrate bzw. Federcharakteristik, da dann die Hauptbelastungsrichtung der Blattfeder 5 bzw. die Richtung der Lasteinleitung in Richtung der längeren Kante N von deren Querschnittsprofil verläuft. Im wesentlichen unverändert ist in diesen beiden Figuren 1, 2 die Position des in den Anlenkstellen A, B gelagerten Verlängerungsschenkels 6, wenngleich die dem anteiligen Gewicht des Fahrzeug-Aufbaus entgegenwirkende Kraft der Blattfeder 5 in der Position von Fig.2 höher als in der Position von Fig.1 ist, so dass korrekterweise der Achsträger 3 mit der Anlenkstelle B in Fig.2 etwas als höher als in Fig.1 liegen müsste.

In den **Figuren 1****,** **2** weiterhin auf das wesentliche abstrahiert dargestellt ist ein geeignet am Verlängerungsschenkel 6 befestigter Aktuator 10, welcher aus einem bspw. als Elektromotor ausgebildeten Stellmotor 10a mit nachgeschaltetem Schneckentrieb 10b besteht. Ein Abtriebsritzel dieses Schneckentriebs 10b trägt eine formschlüssige Aufnahme 10c für das Kuppelelement 7 und ist damit fest derart mit dem in den Figuren 1, 2 selbstverständlich ebenso wie die Blattfeder 5 in verschiedenen erfindungsgemäßen Drehpositionen dargestellten Kuppelelement 7 verbunden, dass mittels dieses Aktuators 10 die Blattfeder 5 erfindungsgemäß in die verschiedenen Drehwinkel-Positionen positionierbar ist. Selbstverständlich ist hierfür auch das rechtsseitige Ende der Blattfeder 5 über ein Kuppelelement gegenüber dem rechten Verlängerungsschenkel verdrehbar; dabei muss dort kein weiterer Aktuator zum Verdrehen vorgesehen sein.

Während bei der Ausführungsform nach Fig.1, 2 die Blattfeder 5 im im Fahrzeug verbauten Zustand mittels des Aktuators 10 aktiv verdrehbar ist, wobei die Fixierung in den jeweiligen Drehpositionen beispielsweise über Selbsthemmung des Schneckentriebs 10b erfolgt oder erfolgen kann, zeigt **Fig.3b** abermals nur prinzipiell, wie eine besagte Fixierung quasi endgültig in einer gewissen Drehposition während des Montageprozesses der Blattfeder 5 bzw. der gesamten Blattfeder-Anordnung im Fahrzeug bzw. in der Fahrzeug-Achse erfolgen kann. Dabei zeigt Fig.3b entweder die Aufsicht auf die der Stirnseite des Verlängerungsschenkels 6 zugewandte Fläche der Basis 7c des Kuppelelements 7, oder die Aufsicht auf die Stirnseite des Verlängerungsschenkels 6, welche der Basis 7c des Kuppelelements 7 zugewandt ist. Man erkennt neben dem bereits genannten Bolzen 8, um den bzw. um dessen Achse das Kuppelelement 7 zunächst einmal (d.h. vor Abschluss des Montageprozesses) verdrehbar sein soll, eine Formausprägung auf der sichtbaren Fläche nach Art einer (senkrecht zur Zeichenebene vorspringenden) Stirn- oder Hirth-Verzahnung. Diese kann derart gestaltet sein, dass das Kuppelelement 7 und damit die Blattfeder 5 bspw. nur in zwei definierten erfindungsgemäßen Drehwinkel-Positionen am Verlängerungsschenkel 6 starr (beispielsweise durch Festziehen einer Schraubenbolzen-Mutter-Verbindung mit dem Bolzen 8) befestigt werden kann.

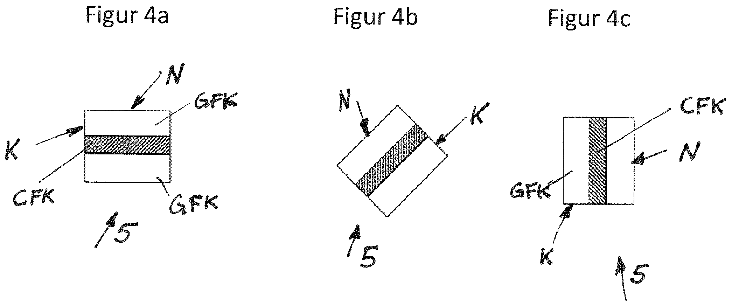

Vorzugsweise ist die Blattfeder 5 in faserverstärktem Kunststoff ausgeführt. In den **Figuren 4a** - **4c** ist das Querschnittsprofil (mit den Kanten K und N) einer möglichen Ausführungsform einer erfindungsgemäß angeordneten Blattfeder 5 in verschiedenen (erfindungsgemäßen) Drehwinkelpositionen dargestellt. Die hier gezeigte Blattfeder 5 ist aus drei Schichten zusammengesetzt bzw. besteht aus drei Lagen, wobei die in Fig.4a obere und untere Deckschicht oder Lage aus glasfaserverstärktem Kunststoff (GFK) besteht, während die dazwischen liegende Zwischenschicht bzw. Lage in kohlefaserverstärktem Kunststoff (CFK) ausgeführt ist. Im Zustand nach Fig.4a liegt die mittlere CFK-Schicht in der neutralen Zone; in der Position gemäß Fig.4c liegen auch die oberen und unteren Bereiche der CFK-Schicht in der Druck- bzw. Zugzone der Blattfeder 5.

## Patentansprüche

1. Fahrwerk eines Fahrzeugs mit einer zwischen dem Fzg-Aufbau (3) und zumindest einem Rad (1) des Fahrzeugs wirkenden Blattfeder (5), die um eine sich in Richtung ihrer Längserstreckung erstreckende Achse verdrehbar angeordnet ist,
**dadurch gekennzeichnet, dass** die Blattfeder (5) mit ihren Enden solchermaßen im Fahrwerk fixierbar ist, dass sie zur Veränderung ihrer Federkraftcharakteristik in zumindest zwei verschiedenen Drehpositionen, die sich um einen Drehwinkel von 90° unterscheiden, fixiert werden kann.

2. Fahrwerk eines zweispurigen Fahrzeugs nach Anspruch 1, wobei die Enden der sich in Fahrzeug-Querrichtung erstreckenden und bezüglich der jeweiligen Fahrzeug-Achse zentral angeordneten Blattfeder (5) jeweils über ein Kuppelelement (7) mit einem Verlängerungsschenkel (6) verbunden sind, an dessen anderem Ende ein Rad (1) der Achse abgestützt ist, während der Fahrzeug-Aufbau (3) nahe der Kuppelelemente (7) auf der durch die Blattfeder (5) mit den beiden Verlängerungsschenkeln (6) gebildeten Blattfeder-Anordnung abgestützt ist, und wobei die Kuppelelemente (7) ausgelegt sind, die Blattfeder (5) in besagten zumindest zwei verschiedenen Drehpositionen an den Verlängerungsschenkeln (6) zu fixieren.

3. Fahrwerk eines Fahrzeugs nach Anspruch 1 oder 2 mit zumindest einem Aktuator (10), mit Hilfe dessen die Blattfeder (5) insbesondere gegenüber den Verlängerungsschenkeln (6) in besagter Weise verdrehbar und an diesen in zumindest zwei verschiedenen Drehwinkeln fixierbar ist.

4. Fahrwerk eines Fahrzeugs nach einem der vorangegangenen Ansprüche, wobei das Kuppelelement (7) als ein formschlüssiges Verbindungselement ausgebildet ist.

5. Fahrwerk eines Fahrzeugs nach einem der vorangegangenen Ansprüche, wobei das das Ende der Blattfeder (5) formschlüssig aufnehmende Kuppelelement (7) in verschiedenen um die gewünschte Drehachse der Blattfeder (5) verdrehten Positionen am Verlängerungsschenkel (6) fixierbar ist.

6. Fahrwerk eines Fahrzeugs nach Anspruch 5 mit einem formschlüssigen nach Art einer Stirnverzahnung ausgebildeten Verbindungsbereich zwischen dem Kuppelelement (7) und dem zugehörigen Endabschnitt des Verlängerungsschenkels (6).

7. Fahrwerk eines Fahrzeugs nach einem der vorangegangenen Ansprüche, wobei der Aktuator (10) als Schneckengetriebe (10b) mit Stellmotor (10a) ausgebildet ist.

8. Fahrwerk eines Fahrzeugs nach einem der vorangegangenen Ansprüche, wobei der Querschnitt der Blattfeder (5) ein von einer Rechteck-Form abweichendes Profil aufweist.

9. Fahrwerk eines Fahrzeugs nach einem der vorangegangenen Ansprüche, wobei die Blattfeder (5) verschiedene Lagen (GFK, CFK) mit unterschiedlicher Steifigkeit oder Festigkeit aufweist.

## Claims

1. A chassis of a vehicle with a leaf spring (5) acting between the vehicle body (3) and at least one wheel (1) of the vehicle, which leaf spring is arranged rotatably about an axis extending in the direction of the longitudinal extent of the leaf spring,
**characterised in that** the leaf spring (5) can be fixed in the chassis with its ends such that it can be fixed in at least two different rotational positions, which differ by an angle of rotation of 90°, in order to change its spring force characteristic.

2. A chassis of a two-track vehicle according to claim 1, wherein the ends of the leaf spring (5) extending in the transverse direction of the vehicle and arranged centrally relative to the associated vehicle axle are in each case connected via a coupling element (7) to an extension arm (6), on the other end of which a wheel (1) of the axle is supported, whereas the vehicle body (3) close to the coupling elements (7) is supported on the leaf spring arrangement formed by the leaf spring (5) with the two extension arms (6), and wherein the coupling elements (7) are designed to fix the leaf springs (5) to the extension arms (6) in said at least two different rotational positions.

3. A chassis of a vehicle according to claim 1 or 2, comprising at least one actuator (10), with the aid of which the leaf spring (5) more especially is rotatable relative to the extension arms (6) in the said manner and can be fixed thereto in at least two different rotational angles.

4. A chassis of a vehicle according to any one of the preceding claims, wherein the coupling element (7) is formed as a form-fitting connection element.

5. A chassis of a vehicle according to any one of the preceding claims, wherein the coupling element (7) receiving the end of the leaf spring (5) form-fittingly can be fixed to the extension arms (6) in various positions rotated about the desired axis of rotation of the leaf spring (5).

6. A chassis of a vehicle according to claim 5 with a form-fitting connection region, formed in the manner of a spur gearing, between the coupling element (7) and the associated end portion of the extension arm (6).

7. A chassis of a vehicle according to any one of the preceding claims, wherein the actuator (10) is formed as a worm gear (10b) with servomotor (10a).

8. A chassis of a vehicle according to any one of the preceding claims, wherein the cross-section of the leaf spring (5) has a profile deviating from a rectangular shape.

9. A chassis of a vehicle according to any one of the preceding claims, wherein the leaf spring (5) has different layers (GRP, CFRP) of different rigidity or strength.

## Revendications

1. Train de roulement d'un véhicule comprenant un ressort à lames (5) agissant entre la carrosserie (3) du véhicule et au moins une roue (1) de ce véhicule, et qui est monté mobile en rotation autour d'un axe s'étendant dans la direction de son extension longitudinale,
**caractérisé en ce que**
le ressort à lames (5) peut être fixé par ses extrémités au train de roulement de sorte qu'il puisse être fixé dans au moins deux positions de rotation différentes qui diffèrent d'un angle de rotation de 90° pour permettre de modifier sa caractéristique de force élastique.

2. Train de roulement d'un véhicule à deux lignes de roues conforme à la revendication 1,
dans lequel les extrémités du ressort à lames (5) qui s'étend dans la direction transversale du véhicule et a une position centrale par rapport à l'essieu associé du véhicule, sont respectivement reliées par un élément de couplage (7) à une branche de prolongement (6) à l'autre extrémité de laquelle s'appuie une roue (1) de l'essieu, tandis que la carrosserie (3) du véhicule s'appuie, à proximité de l'élément de couplage (7) sur le dispositif de ressort à lames formé par le ressort à lames (5) et les deux branches de prolongement (6), et les éléments de couplage (7) étant réalisés pour permettre de fixer le ressort à lames (5) dans les deux positions de rotation différentes susmentionnées sur les branches de prolongement (6).

3. Train de roulement d'un véhicule conforme à la revendication 1 ou 2,
comprenant au moins un actionneur (10) à l'aide duquel le ressort à lames (5) peut être déplacé en rotation de la manière susmentionnée en particulier par rapport aux branches de prolongement (6) et être fixé sur celles-ci selon au moins deux angles de rotation différents.

4. Train de roulement d'un véhicule conforme à l'une des revendications précédentes,
dans lequel l'élément de couplage (7) est réalisé sous la forme d'un élément de liaison par la forme.

5. Train de roulement d'un véhicule conforme à l'une des revendications précédentes,
dans lequel l'élément de couplage (7) recevant l'extrémité du ressort à lames (5) par une liaison par la forme peut être fixé sur la branche de prolongement (6) dans différentes positions réparties autour de l'axe de rotation souhaité du ressort à lames (5).

6. Train de roulement d'un véhicule conforme à la revendication 5, comprenant une zone de liaison par la forme réalisée sous la forme d'une denture frontale entre l'élément de couplage (7) et le segment correspondant de la branche de prolongement (6).

7. Train de roulement d'un véhicule conforme à l'une des revendications précédentes,
dans lequel l'actionneur (10) est réalisé sous la forme d'un mécanisme à vis sans fin (10b) avec un servomoteur (10a).

8. Train de roulement d'un véhicule conforme à l'une des revendications précédentes,
dans lequel la section du ressort à lames (5) a un profil différent d'une forme rectangulaire.

9. Train de roulement d'un véhicule conforme à l'une des revendications précédentes,
dans lequel le ressort à lames (5) comporte différentes couches (GFK, CFK) ayant différentes rigidités ou résistances.
